# EUROPÄISCHE PATENTANMELDUNG

(11) **EP 4 793 114 A1**
(43) Veröffentlichungstag der Anmeldung: **19.08.2026**
(21) Anmeldenummer: 26152004.3
(22) Anmeldetag: 15.01.2026
(51) Int. Cl.: B60S 5/00

(54) **LANDMASCHINE UND VERFAHREN ZUM BETREIBEN DERSELBEN**

(30) Priorität: 14.02.2025 DE 102025105625
(71) Anmelder: CLAAS Saulgau GmbH, 88340 Bad Saulgau (DE)
(72) Erfinder: Butscher, Martin, 88273 Blitzenreute (DE); Wälder, Florian, 72517 Sigmaringendorf (DE); Kaufmann, Armin, 88367 Hohentengen (DE)
(74) Vertreter: CLAAS Gruppe

(57) **Zusammenfassung**

Landmaschine (10), mit mindestens einer fluidgefüllten Baugruppe (12), insbesondere mit mindestens einem ölgefüllten Getriebe und/oder mindestens einem kühlmittelgefüllten Kühler, mit mindestens einer Verlagerungseinrichtung (15), die eingerichtet ist, die jeweilige fluidgefüllte Baugruppe (12) zwischen einer Arbeitsposition und mindestens einer Wartungsposition, in welcher von der jeweilige fluidgefüllten Baugruppe (12) Fluid abführbar und/oder in welcher der jeweiligen fluid-gefüllten Baugruppe (12) Fluid zuführbar ist, zu überführen, und mit mindestens einem Neigungssensor (23, 24), der eingerichtet ist, einen Ist-Wert einer Neigung der jeweiligen fluidgefüllten Baugruppe (12) zumindest um eine Querachse (16) der Landmaschine (10) zu messen und/oder anzuzeigen, um abhängig von dem gemessenen Ist-Wert die Neigung der jeweiligen fluidgefüllten Baugruppe (12) mit Hilfe der mindestens einen Verlagerungseinrichtung (15) in Richtung auf einen von der jeweiligen fluidgefüllten Baugruppe (12) einzunehmenden Wartungsposition abhängigen Soll-Wert zu überführen.

## Beschreibung

Die Erfindung betrifft eine Landmaschine nach dem Oberbegriff des Anspruchs 1. Des Weiteren betrifft die Erfindung ein Verfahren zum Betreiben einer Landmaschine.

An einer Landmaschine, wie zum Beispiel einem Feldhäcksler, einem Mähdrescher, einer Heuwerbungsmaschine oder auch an einem landwirtschaftlichen Zugfahrzeug sind fluidgefüllte Baugruppen verbaut, so zum Beispiel ölgefüllte Getriebe und/oder kühlmittelgefüllte Kühler. Dann, wenn an einer solchen fluidgefüllten Baugruppe Wartungsarbeiten durchgeführt werden, muss die fluidgefüllte Baugruppe in eine definierte Wartungsposition überführt werden, die durch eine definierte Neigung der fluidgefüllten Baugruppe in Querrichtung der Landmaschine und gegebenenfalls in Längsrichtung der Landmaschine gekennzeichnet ist. Für einen Fluidtausch an der jeweiligen fluidgefüllten Baugruppe können unterschiedliche Wartungspositionen vorgesehen sein, so zum Beispiel eine erste Wartungsposition, um für einen Fluidwechsel von der jeweiligen fluidgefüllten Baugruppe Fluid abzuführen und eine zweite Wartungsposition, um für einen Fluidwechsel der jeweiligen fluidgefüllten Baugruppe Fluid zuzuführen.

Bislang bereitet es Schwierigkeiten, eine fluidgefüllte Baugruppe in eine jeweilige Wartungsposition einfach und zuverlässig zu überführen. Es besteht daher Bedarf an einer Landmaschine und an einem Verfahren zum Betreiben einer Landmaschine, mithilfe derer eine fluidgefüllte Baugruppe einfach und zuverlässig in eine jeweilige Wartungsposition überführt werden kann.

Aufgabe der hier vorliegenden Erfindung ist es, eine entsprechende Landmaschine sowie ein Verfahren zum Betreiben einer solchen Landmaschine bereitzustellen.

Diese Aufgabe wird durch eine Landmaschine nach Anspruch 1 und ein Verfahren nach Anspruch 10 gelöst.

Die erfindungsgemäße Landmaschine weist mindestens eine fluidgefüllte Baugruppe, insbesondere mindestens ein ölgefülltes Getriebe und/oder mindestens einen kühlmittelgefüllten Kühler auf. Die erfindungsgemäße Landmaschine weist ferner mindestens eine Verlagerungseinrichtung auf, die eingerichtet ist, die jeweilige fluidgefüllte Baugruppe zwischen einer Arbeitsposition und mindestens einer Wartungsposition, in welcher von der jeweiligen fluidgefüllten Baugruppe Fluid abführbar und/oder in welcher der jeweiligen fluidgefüllten Baugruppe Fluid zuführbar ist, zu überführen. Die erfindungsgemäße Landmaschine weist ferner mindestens einem Neigungssensor und/oder eine Neigungsanzeige auf, die dazu eingerichtet sind, einen Ist-Wert einer Neigung der jeweiligen fluidgefüllten Baugruppe zumindest um eine Querachse der Landmaschine zu messen bzw. anzuzeigen, um abhängig von dem gemessenen Ist-Wert die Neigung der jeweiligen fluidgefüllten Baugruppe mit Hilfe der Verlagerungseinrichtung in Richtung auf einen von der jeweiligen fluidgefüllten Baugruppe einzunehmenden Wartungsposition abhängigen Soll-Wert zu überführen. Mit der Erfindung ist es möglich, eine jeweilige fluidgefüllte Baugruppe einer Landmaschine einfach und zuverlässig in eine jeweilige Wartungsposition zu überführen. Hiermit ist eine schnelle, fehlerfreie Wartung an einer fluidgefüllten Baugruppe möglich, ohne dass Hilfswerkzeuge erforderlich sind. Selbst dann, wenn die Landmaschine auf einem schrägen Untergrund steht, kann die jeweilige fluidgefüllte Baugruppe einfach und zuverlässig in eine jeweilige Wartungsposition überführt werden.

Im Zusammenhang mit der vorliegenden Erfindung ist ein Neigungssensor ein Messfühler, der eine Neigung erfasst und diese optisch darstellt, so dass eine bedienende Person in die Lage versetzt wird, eine vorgegebene Neigung einzustellen. Alternativ oder zusätzlich kann ein erfindungsgemäßer Neigungssensor die erfasste Neigung in ein elektrisches Signal umwandeln, welches datentechnisch und/oder steuerungstechnisch verarbeitet werden kann.

Vorzugsweise ist der mindestens eine Neigungssensor eingerichtet, den Ist-Wert der Neigung der jeweiligen fluidgefüllten Baugruppe um die Querachse der Landmaschine und den Ist-Wert der Neigung der jeweiligen fluidgefüllten Baugruppe um die Längsachse der Landmaschine zu messen und/oder anzuzeigen, wobei die Verlagerungseinrichtung dazu eingerichtet ist, die Neigungen in Richtung auf von der jeweiligen fluidgefüllten Baugruppe einzunehmenden Wartungsposition abhängige Soll-Werte zu überführen. Hiermit kann sowohl die Neigung der jeweiligen fluidgefüllten Baugruppe in Querrichtung als auch in Längsrichtung der Landmaschine erfasst und zur Überführung der jeweiligen fluidgefüllten Baugruppe in ihre jeweilige Wartungsposition genutzt werden. Dies ist besonders bevorzugt, um eine schnelle Wartung unter Vermeidung von Wartungsfehlern ohne die Notwendigkeit von Hilfswerkzeugen an einer fluidgefüllten Baugruppe durchzuführen. Nach einer ersten Ausführungsform der Erfindung greift an der jeweiligen fluidgefüllten Baugruppe oder an einem die jeweilige fluidgefüllte Baugruppe aufnehmenden Träger für jede Wartungsposition der jeweiligen fluidgefüllten Baugruppe ein wartungspositionsindividueller Neigungssensor und/oder eine Neigungsanzeige an, wobei der jeweilige wartungspositionsindividuelle Neigungssensor und eine wartungspositionsindividuelle Wartungseinrichtung der jeweiligen fluidgefüllten Baugruppe vorzugsweise durch eine optisch wahrnehmbare Codierung einander zugeordnet sind, und wobei vorzugsweise der jeweilige wartungspositionsindividuelle Neigungssensor derart an der jeweiligen fluidgefüllten Baugruppe oder an dem die jeweilige fluidgefüllten Baugruppe aufnehmenden Träger angreift, dass derselbe im Sichtfeld eines an einer Bedienposition oder Bedienerschnittstelle der mindestens einen Verlagerungseinrichtung befindlichen Bedieners liegt. Die erste Ausführungsform ist insbesondere dann von Vorteil, wenn ein Bediener die Verlagerungseinrichtung manuell ansteuert, um die jeweilige fluidgefüllte Baugruppe in die jeweilige Wartungsposition zu überführen.

Nach einer zweiten Ausführungsform der Erfindung ist der mindestens eine Neigungssensor eingerichtet, den gemessenen Ist-Wert der jeweiligen Neigung an ein Steuergerät zu übermitteln, wobei in dem Steuergerät für die mindestens eine Wartungsposition der mindestens einen fluidgefüllten Baugruppe ein jeweiliger Soll-Wert der jeweiligen Neigung gespeichert ist, und wobei das Steuergerät eingerichtet ist, dann, wenn für eine fluidgefüllte Baugruppe die Einnahme einer definierten Wartungsposition angefordert ist, die Verlagerungseinrichtung derart automatisch anzusteuern, dass der Ist-Wert der jeweiligen Neigung in Richtung auf den Soll-Wert der jeweiligen Neigung der einzunehmenden definierten Wartungsposition überführt wird. Die zweite Ausführungsform erlaubt eine vollautomatische Überführung einer jeweiligen fluidgefüllten Baugruppe in ihre jeweilige Wartungsposition.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: eine als Feldhäcksler ausgebildete erfindungsgemäße Landmaschine mit einer im Bereich eines Maisgebisses verbauten fluidgefüllten Baugruppe in Arbeitsposition,
- Fig. 2: die Landmaschine der Fig. 1 mit der im Bereich des Maisgebisses verbauten fluidgefüllten Baugruppe in einer ersten Wartungsposition,
- Fig. 3: die Landmaschine der Fig. 1 mit der im Bereich des Maisgebisses verbauten fluidgefüllten Baugruppe in einer zweiten Wartungsposition.

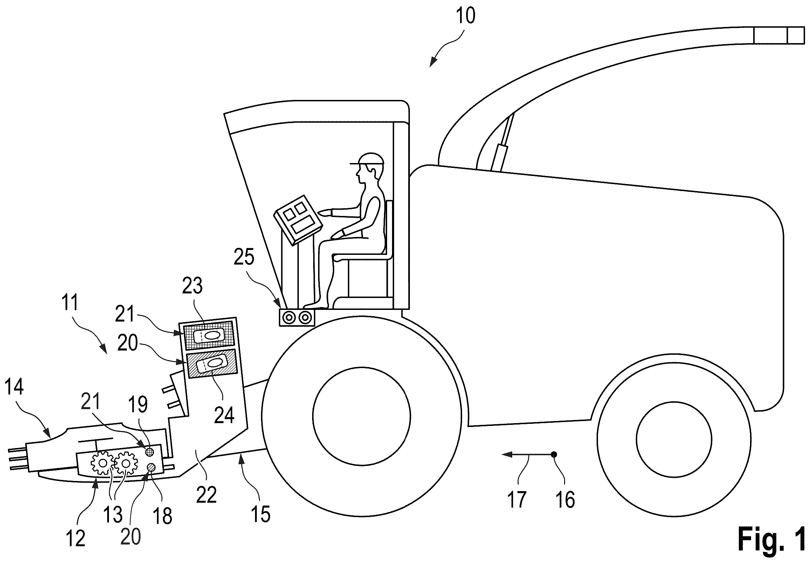

Fig. 1 zeigt eine als Feldhäcksler ausgebildete Landmaschine 10 mit einem Maisgebiss 11.

Ferner zeigt Fig. 1 eine fluidgefüllte Baugruppe 12, die am Maisgebiss 11 verbaut ist und in Fig. 1 als ölgefülltes Getriebe ausgeführt ist. Von dem Getriebe sind in Fig. 1 Zahnräder 13 gezeigt, die dazu dienen, Antriebsleistung auf Schneid- und Einzugseinheiten 14 des Maisgebisses 11 zu übertragen.

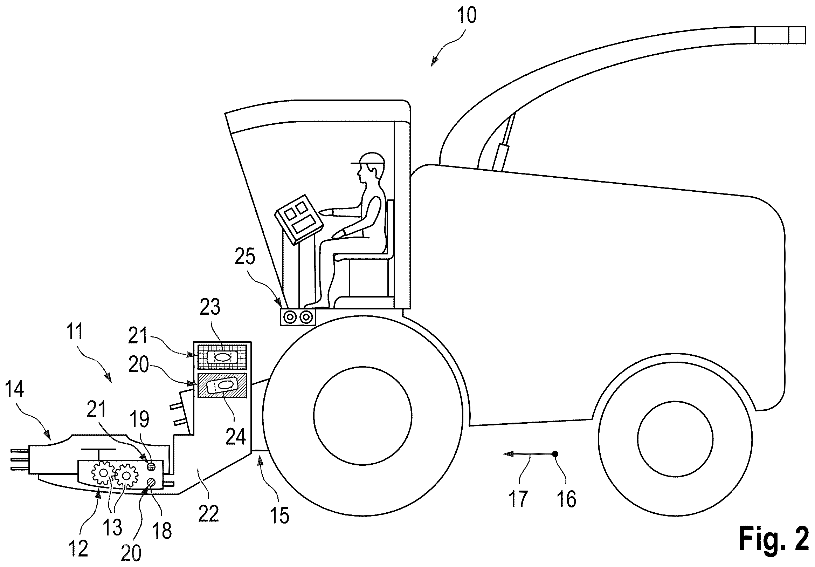

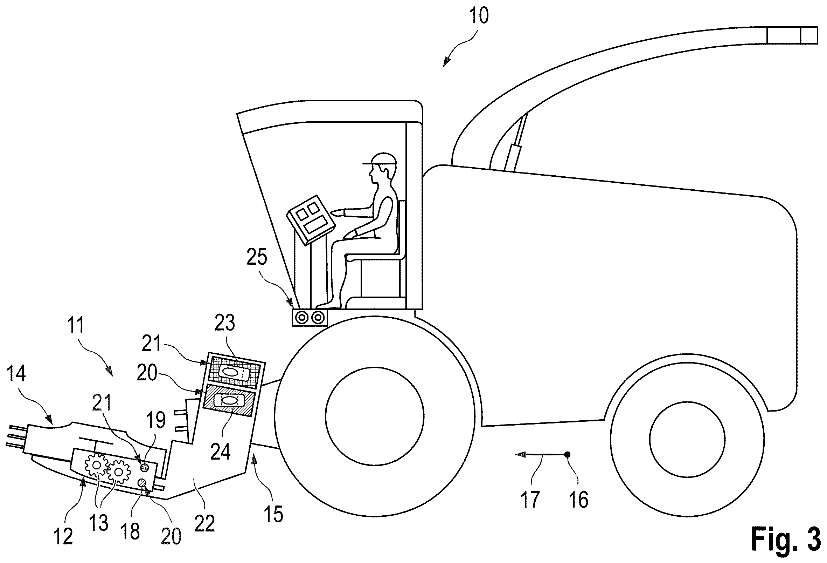

Fig. 1 zeigt die als Feldhäcksler ausgebildete Landmaschine 10 in Arbeitsposition. Fig. 2 und 3 zeigen die als Feldhäcksler ausgebildete Landmaschine 10 in unterschiedlichen Wartungspositionen für die in Fig. 1 gezeigte, fluidgefüllte Baugruppe 12.

Zur Überführung des Maisgebisses 11 der Landmaschine 10 und damit der jeweiligen fluidgefüllten Baugruppe 12 zwischen einer Arbeitsposition und einer jeweiligen Wartungsposition weist die Landmaschine 10 eine Verlagerungseinrichtung 15 auf. Über die Verlagerungseinrichtung 15 kann bei der als Feldhäcksler ausgebildeten Landmaschine 10 das Maisgebiss 11 und damit die jeweilige fluidgefüllte Baugruppe 12 zwischen unterschiedlichen Positionen überführt werden, und zwar durch Veränderung der Neigung des Maisgebisses 11 und damit der jeweiligen fluidgefüllten Baugruppe 12 zumindest um eine Querachse 16 und insbesondere auch um eine Längsachse 17 der Landmaschine 10. Die Längsachse 17 der Landmaschine 10 fällt mit einer Fahrtrichtung der Landmaschine 10 zusammen und liegt in Fig. 1 in der Zeichenebene. Die Querachse 16 steht senkrecht zur Zeichenebene der Fig. 1.

Wie bereits ausgeführt, ist die in Fig. 1 bis 3 gezeigte fluidgefüllte Baugruppe 12 durch zwei unterschiedliche Wartungspositionen gekennzeichnet, wobei in der in Fig. 3 gezeigten ersten Wartungsposition von der jeweiligen fluidgefüllten Baugruppe über eine erste Wartungseinrichtung 18 Fluid abgeführt und in der in Fig. 2 gezeigten zweiten Wartungsposition über eine zweite Wartungseinrichtung 19 der fluidgefüllten Baugruppe 12 Fluid zugeführt werden kann. Bei diesen Wartungseinrichtungen 18, 19 kann es sich um Schrauben oder Ventile oder dergleichen handeln, um entweder Fluid abzuführen oder Fluid zuzuführen.

Bei dem in Fig. 1 bis 3 gezeigten Ausführungsbeispiel, bei welchem die fluidgefüllte Baugruppe 12 als ölgefülltes Getriebe ausgeführt ist, kann in der ersten Wartungsposition der Fig. 3 von der Baugruppe 12 für einen Ölwechsel Öl abgelassen werden, um anschließend in der zweiten Wartungsposition der Fig. 2 der Baugruppe 12 über die Wartungseinrichtung 19 Öl zuzuführen.

Die Landmaschine 10 weist mindestens einen Neigungssensor 23, 24 auf, der eingerichtet ist, einen Ist-Wert der Neigung der jeweiligen fluidgefüllten Baugruppe 12 zumindest um die Querachse 16 und vorzugsweise auch um die Längsachse 17 der Landmaschine 10 zu messen, und um abhängig von dem jeweiligen gemessenen Ist-Wert die Neigung der jeweiligen fluidgefüllten Baugruppe 12 mithilfe der Verlagerungseinrichtung 15 in Richtung auf einen von der jeweiligen fluidgefüllten Baugruppe 12 einzunehmenden Wartungsposition abhängigen Soll-Wert zu überführen, und zwar zumindest bezogen auf die Neigung um die Querachse 16 der Landmaschine 10 und vorzugsweise auch bezogen auf die Neigung um die Längsachse 17 der Landmaschine 10.

In Fig. 1 bis 3 sind zwei Neigungssensoren 23, 24 gezeigt, die der fluidgefüllten Baugruppe 12 zugeordnet sind, wobei in Fig. 1 diese beiden Neigungssensoren 23, 24 zusammen mit der fluidgefüllten Baugruppe 12 an einem diese Baugruppen aufnehmenden Träger 22 des Maisgebisses 11 der als Feldhäcksler ausgebildeten Landmaschine 10 angreifen.

Bei den Neigungssensoren 23, 24 der Fig. 1 bis 3 handelt es sich dabei um wartungspositionsindividuelle Neigungssensoren 23, 24, die eine Wasserwaagelibelle 23, 24 aufweisen bzw. als solche ausgebildet sind.

Beim Neigungssensor 24 handelt es sich dabei um einen wartungsindividuellen Neigungssensor für die erste Wartungsposition der Fig. 3, beim Neigungssensor 23 um einen wartungsindividuellen Neigungssensor für die Wartungsposition der Fig. 2. So kann über die Wasserwaagelibelle des Neigungssensors 24 überprüft werden, ob die fluidgefüllte Baugruppe 12 ordnungsgemäß in ihre erste Wartungsposition der Fig. 3 überführt wurde. Über die Wasserwaagelibelle des Neigungssensors 23 kann überprüft werden, ob die jeweilige fluidgefüllte Baugruppe 12 ordnungsgemäß in ihre Wartungsposition der Fig. 2 überführt wurde.

Fig. 1 bis 3 kann entnommen werden, dass der jeweilige wartungsindividuelle Neigungssensor 23, 24 für die fluidgefüllte Baugruppe 12 sowie die jeweilige wartungspositionsindividuelle Wartungseinrichtung 18, 19 der fluidgefüllten Baugruppe 12 durch eine optisch wahrnehmbare Codierung 20, 21 einander zugeordnet sind. So weisen die Wartungseinrichtung 18 und der Neigungssensor 24 sowie die Wartungseinrichtung 19 und der Neigungssensor 23 jeweils eine identische optische Codierung 20 bzw. 21 auf, um so einem Bediener unmittelbar anzuzeigen, durch welchen Neigungssensor 23, 24 überprüft werden kann, ob die jeweilige wartungspositionsindividuelle Wartungseinrichtung und damit die jeweilige fluidgefüllte Baugruppe in ihrer jeweilige Wartungsposition überführt wurde.

Die optisch wahrnehmbare Codierung 20, 21 kann dabei, wie in Fig. 1 bis 3 gezeigt, durch eine Musterkennzeichnung bereitgestellt werden. Alternativ oder zusätzlich kann die optische Codierung durch eine farbliche Kennzeichnung, alphanumerische Kennzeichnung, Gravur oder sonstige Oberflächengestaltung des jeweiligen wartungspositionsindividuellen Neigungssensors 23, 24 und der jeweiligen wartungspositionsindividuellen Wartungseinrichtung 18, 19 bereitgestellt werden.

Im Ausführungsbeispiel der Fig. 1 bis 3, in welchem wartungspositionsindividuelle Neigungssensoren 23, 24 zum Einsatz kommen, sind die wartungspositionsindividuellen Neigungssensoren 23, 24 derart an der jeweiligen fluidgefüllten Baugruppe 12 oder an dem die jeweilige fluidgefüllte Baugruppe 12 aufnehmenden Träger 22 derart verbaut, dass dieselben im Sichtfeld eines an einer Bedienposition der Verlagerungseinrichtung 15 befindlichen Bedieners liegen.

So zeigen Fig. 1 bis 3 eine Bedienerschnittstelle 25, über die ein Bediener die Verlagerungseinrichtung ansteuern kann, nämlich insbesondere um die Neigung des Maisgebisses 11 und damit der jeweiligen fluidgefüllten Baugruppe 12 zu verändern. Durch Betätigen der Bedienerschnittstelle 25 von der Bedienposition aus, von welcher auch die Neigungssensoren 23, 24 aus sichtbar sind, kann dann ein Bediener einfach und zuverlässig das Maisgebiss 11 und damit die jeweilige fluidgefüllte Baugruppe 12 einfach und zuverlässig in eine jeweilige Wartungsposition überführen.

Es ist auch möglich, dass die Bedienerschnittstelle 25 portabel ist und zum Beispiel auf einem Tablet, Smartphone oder dergleichen bereitgestellt wird. In diesem Fall kann dann der Bediener eine Bedienposition, von welcher aus die Neigungssensoren 23, 24 aus optimal sichtbar sind, flexibel einnehmen.

Auch ist es möglich, dass die Neigungssensoren 23, 24 ihre Messwerte an ein Tablet, Smartphone oder dergleichen übertragen, um dann im Bereich einer fest verbauten Bedienerschnittstelle 25 die Messwerte der Neigungssensoren 23, 24 dem Bediener anzuzeigen.

Die in Fig. 1 bis 3 gezeigten Neigungssensoren 23, 24 dienen der Erfassung von Ist-Werten der Neigung um die Querachse 16 der Landmaschine 10. Selbstverständlich kann ein weiterer derartiger Neigungssensor vorhanden sein, über welchen die Neigung des Maisgebisses 11 und damit der jeweiligen fluidgefüllten Baugruppe 12 um die Längsachse 17 der Landmaschine 10 erfasst werden kann.

Das in Fig. 1 bis 3 gezeigte Ausführungsbeispiel ist dann bevorzugt, wenn das Maisgebiss 11 und damit die jeweilige fluidgefüllte Baugruppe 12 über eine Betätigung der Bedienerschnittstelle 25 in die jeweilige Wartungsposition überführt werden soll.

Dann, wenn die jeweilige fluidgefüllte Baugruppe 12 vollautomatisch in eine jeweilige Wartungsposition überführt werden soll, ist der mindestens eine Neigungssensor 23, 24 dazu eingerichtet, den gemessenen bzw. erfassten Ist-Wert der jeweiligen Neigung, also der Neigung um die Querachse 16 und vorzugsweise die Neigung um die Längsachse 17, als elektrisches Signal an ein Steuergerät der Landmaschine 10 zu übermitteln.

In dem Steuergerät ist dann für jede Wartungsposition der jeweiligen fluidgefüllten Baugruppe 12 ein jeweiliger Soll-Wert der jeweiligen Neigung gespeichert. Das Steuergerät ist dann eingerichtet, wenn für eine jeweilige fluidgefüllte Baugruppe 12 die Einnahme einer definierten Wartungsposition angefordert ist, die Verlagerungseinrichtung 15 automatisch anzusteuern, und zwar derart, dass der Ist-Wert der jeweiligen Neigung in Richtung auf den Soll-Wert der jeweiligen einzunehmenden definierten Wartungsposition überführt wird.

Die Erfindung betrifft weiterhin ein Verfahren zum Betreiben einer erfindungsgemäßen Landmaschine 10. Das Verfahren umfasst zumindest folgende Schritte: Anfordern einer Wartungsposition für eine jeweilige fluidgefüllte Baugruppe 12 der Landmaschine 10. Messen des Ist-Werts der mindestens einen Neigung der jeweiligen fluidgefüllten Baugruppe 12 mit dem mindestens einen Neigungssensor 23, 24, der für die jeweilige angeforderte Wartungsposition relevant ist. Überführen der jeweiligen fluidgefüllten Baugruppe 12 mithilfe der Verlagerungseinrichtung 15 in die angeforderte Wartungsposition durch Annähern des gemessenen Ist-Werts der Neigung in Richtung auf den von der angeforderten Wartungsposition abhängigen Soll-Wert.

Die Erfindung erlaubt eine einfache und zuverlässige Überführung einer fluidgefüllten Baugruppe 12 einer Landmaschine 10 in ihre jeweilige Wartungsposition unter Vermeidung von Fehlern ohne die Notwendigkeit von Hilfswerkzeugen. Selbst bei schrägem Untergrund kann eine fluidgefüllte Baugruppe 12 zuverlässig in ihre jeweilige angeforderte Wartungsposition überführt werden.

Bei einer erfindungsgemäßen Landmaschine kann es sich um einen Feldhäcksler oder um einen Mähdrescher jeweils mit einem Vorsatzgerät oder um eine andere selbstfahrende Erntemaschine mit einem Arbeitsgerät handeln. Eine erfindungsgemäße Landmaschine kann ebenso als Traktor mit einem an einem Drei-Punkt-Kraftheber angeordneten Arbeitsgerät ausgeführt sein, wobei es sich bei dem Arbeitsgerät insbesondere um ein Mähwerk, Schwader oder Wender handelt. Selbstverständlich sind auch andere Landmaschinen denkbar, deren Arbeitsgeräte an einer Verlagerungseinrichtung angeordnet sind.

### Bezugszeichenliste

- 10: Landmaschine
- 11: Maisgebiss
- 12: fluidgefüllte Baugruppe
- 13: Zahnrad
- 14: Schneid- und Einzugseinheit
- 15: Verlagerungseinrichtung
- 16: Querachse
- 17: Längsachse
- 18: erste Wartungseinrichtung
- 19: zweite Wartungseinrichtung
- 20: Codierung
- 21: Codierung
- 22: Träger
- 23: Neigungssensor/Wasserwaagelibelle
- 24: Neigungssensor/Wasserwaagelibelle
- 25: Bedienerschnittstelle

## Patentansprüche

1. Landmaschine (10),
mit mindestens einer fluidgefüllten Baugruppe (12), insbesondere mit mindestens einem ölgefüllten Getriebe und/oder mindestens einem kühlmittelgefüllten Kühler,
mit mindestens einer Verlagerungseinrichtung (15), die eingerichtet ist, die jeweilige fluidgefüllte Baugruppe (12) zwischen einer Arbeitsposition und mindestens einer Wartungsposition, in welcher von der jeweilige fluidgefüllten Baugruppe (12) Fluid abführbar und/oder in welcher der jeweiligen fluidgefüllten Baugruppe (12) Fluid zuführbar ist, zu überführen,
mit mindestens einem Neigungssensor (23, 24), der eingerichtet ist, einen Ist-Wert einer Neigung der jeweiligen fluidgefüllten Baugruppe (12) zumindest um eine Querachse (16) der Landmaschine (10) zu messen und/oder anzuzeigen, um abhängig von dem gemessenen Ist-Wert die Neigung der jeweiligen fluidgefüllten Baugruppe (12) mit Hilfe der mindestens einen Verlagerungseinrichtung (15) in Richtung auf einen von der jeweiligen fluidgefüllten Baugruppe (12) einzunehmenden Wartungsposition abhängigen Soll-Wert zu überführen.

2. Landmaschine (10) nach Anspruch 1, **dadurch gekennzeichnet, dass** die jeweilige fluidgefüllte Baugruppe (12) eine erste Wartungsposition aufweist, in welcher von der jeweiligen fluidgefüllten Baugruppe (12) Fluid abführbar ist.

3. Landmaschine (10) nach Anspruch 2, **dadurch gekennzeichnet, dass** die jeweilige fluidgefüllte Baugruppe (12) eine zweite Wartungsposition aufweist, in welcher der jeweiligen fluidgefüllten Baugruppe (12) Fluid zuführbar ist.

4. Landmaschine (10) nach einem der Ansprüche 1 bis 3, **dadurch gekennzeichnet, dass** der mindestens eine Neigungssensor (23, 24) eingerichtet ist, den Ist-Wert der Neigung der jeweiligen fluidgefüllten Baugruppe (12) um die Querachse (16) der Landmaschine und den Ist-Wert der Neigung der jeweiligen fluidgefüllten Baugruppe (12) um die Längsachse (17) der Landmaschine zu messen und/oder anzuzeigen, und über die Verlagerungseinrichtung (15) dazu eingerichtet ist, die Neigungen in Richtung auf von der jeweiligen fluidgefüllten Baugruppe (12) einzunehmenden Wartungsposition abhängige Soll-Werte zu überführen.

5. Landmaschine (10) nach einem der Ansprüche 1 bis 4, **dadurch gekennzeichnet, dass** an der jeweiligen fluidgefüllten Baugruppe (12) oder an einem die jeweilige fluidgefüllte Baugruppe (12) aufnehmenden Träger (22) für jede Wartungsposition der jeweiligen fluidgefüllten Baugruppe (12) ein wartungspositionsindividueller Neigungssensor (23, 24) angreift.

6. Landmaschine (10) nach Anspruch 5, **dadurch gekennzeichnet, dass** der jeweilige wartungspositionsindividuelle Neigungssensor (23, 24) und eine wartungspositionsindividuelle Wartungseinrichtung (18, 19) der jeweiligen fluidgefüllten Baugruppe (12) durch eine optisch wahrnehmbare Codierung (20, 21) einander zugeordnet sind.

7. Landmaschine (10) nach Anspruch 5 oder 6, **dadurch gekennzeichnet, dass** der jeweilige wartungspositionsindividuelle Neigungssensor (23, 24) derart an der jeweiligen fluidgefüllten Baugruppe (12) oder an dem die jeweilige fluidgefüllten Baugruppe (12) aufnehmenden Träger (22) angreift, dass derselbe im Sichtfeld eines an einer Bedienerschnittstelle (25) der mindestens einen Verlagerungseinrichtung (15) befindlichen Bedieners liegt.

8. Landmaschine (10) nach einem der Ansprüche 5 bis 7, **dadurch gekennzeichnet, dass** der wartungspositionsindividuelle Neigungssensor (23, 24) als Wasserwaagelibelle (23, 24), als Pendelzeiger oder als elektronischer Sensor, der die Neigung ermittelt und in ein elektrisches Signal umwandelt, welches datentechnisch und/oder steuerungstechnisch verarbeitbar ist, ausgebildet ist.

9. Landmaschine (10) nach einem der Ansprüche 1 bis 4, **dadurch gekennzeichnet, dass** der mindestens eine Neigungssensor (23, 24) eingerichtet ist, den gemessenen Ist-Wert der jeweiligen Neigung an ein Steuergerät zu übermitteln, wobei in dem Steuergerät für die mindestens eine Wartungsposition der mindestens einen fluidgefüllten Baugruppe (12) ein jeweiliger Soll-Wert der jeweiligen Neigung gespeichert ist, und wobei das Steuergerät eingerichtet ist, dann, wenn für eine fluidgefüllte Baugruppe (12) die Einnahme einer definierten Wartungsposition angefordert ist, die mindestens eine Verlagerungseinrichtung (15) derart automatisch anzusteuern, dass der Ist-Wert der jeweiligen Neigung in Richtung auf den Soll-Wert der jeweiligen Neigung der einzunehmenden definierten Wartungsposition überführt wird.

10. Verfahren zum Betreiben einer Landmaschine (10) nach einem der Ansprüche 1 bis 9, mit folgenden Schritten
Anfordern einer Wartungsposition für eine jeweilige fluidgefüllte Baugruppe (12) der Landmaschine (10),
Messen des Ist-Werts der mindestens einen Neigung der jeweiligen fluidgefüllten Baugruppe (12) mit dem mindestens einen Neigungssensor (23, 24),
Überführen der jeweiligen fluidgefüllten Baugruppe (12) mit Hilfe der mindestens einen Verlagerungseinrichtung (15) in die angeforderte Wartungsposition durch Annähern des gemessenen Ist-Werts der jeweiligen Neigung in Richtung auf den von der angeforderten Wartungsposition abhängigen Soll-Wert der jeweiligen Neigung.
